# EUROPEAN PATENT APPLICATION

(11) **EP 4 610 090 A1**
(43) Date of publication of application: **03.09.2025**
(21) Application number: 22962934.0
(22) Date of filing: 27.10.2022
(51) Int. Cl.: B60L 15/20, B60L 3/00

(54) **ELECTRIC VEHICLE CONTROL METHOD AND ELECTRIC VEHICLE CONTROL DEVICE**

(71) Applicant: Nissan Motor Co., Ltd., Kanagawa 221-0023 (JP)
(72) Inventor: ISHIJIMA, Masahiro, Atsugi-shi, Kanagawa 243-0123 (JP); HIROI, Daisuke, Atsugi-shi, Kanagawa 243-0123 (JP); HASEGAWA, Tetsu, Atsugi-shi, Kanagawa 243-0123 (JP); ISOZAKI, Yusuke, Atsugi-shi, Kanagawa 243-0123 (JP)
(74) Representative: Hoefer & Partner Patentanwälte mbB
(86) International application number: PCT/JP2022/040210
(87) International publication number: WO 2024/089848

(57) **Abstract**

An aspect of the present invention is a method for controlling an electric vehicle, the electric vehicle having a power consumption suppression mode and a driving performance mode as a control mode for distributing a required torque to a front torque and a rear torque and adjusting the distribution of the required torque. In the method, in the power consumption suppression mode, the required torque is distributed more to either the front torque or the rear torque, and in the driving performance mode, the front torque or the rear torque to which the required torque is distributed more in the power consumption suppression mode is reduced. In addition, a temperature of one drive system of a front drive system for driving the front wheel and a rear drive system for driving the rear wheel is acquired. The output of front torque or the rear torque to which the required torque is distributed more in the power consumption suppression mode is limited by setting, for the distributed front torque or rear torque, an upper limit value according to the temperature of the front drive system or the rear drive system. Further, when the control mode is the power consumption suppression mode, the control mode is switched to the driving performance mode after the upper limit value decreases and before the output of the front torque or the rear torque is limited to the upper limit value.

## Description

### TECHNICAL FIELD

The present invention relates to a method for controlling an electric vehicle and a device for controlling an electric vehicle.

### BACKGROUND ART

JP2020-082988A discloses a vehicle driving mode control device that drives front wheels using power of an engine, drives rear wheels using power of a motor generator, and switches between two-wheel drive and four-wheel drive by adjusting distribution of a driving force between the engine and the motor generator. In addition, an object of the configuration of the driving mode control device is to stabilize a behavior of a hybrid vehicle that suppresses power consumption by reducing a region in which the hybrid vehicle operates in four-wheel drive and enlarging a region in which the hybrid vehicle operates in a two-wheel drive state.

### SUMMARY OF INVENTION

A four-wheel drive electric vehicle may adjust a torque (driving force) distribution between front wheels and rear wheels. Specifically, the torque distribution is substantially adjusted to a distribution for suppressing power consumption by making an electric vehicle operate in two-wheel drive or to a distribution for improving driving performance by making the electric vehicle operate in four-wheel drive.

In the torque distribution for suppressing the power consumption, the electric vehicle is substantially driven in the two-wheel drive state as described above, and either a front wheel drive system or a rear wheel drive system operates intensively. For example, when the two-wheel drive is performed by the front wheels to suppress power consumption, an electric motor or an inverter that drives the front wheels operates intensively. As a result, depending on a driving scene, either the front wheel drive system or the rear wheel drive system may fall into an overheating state.

In addition, when the electric motor or the inverter may fall into an overheating state, an output torque is limited in order to prevent damage due to the overheating state. For example, when the electric motor that drives the front wheels is in an overheating state, an output limitation is imposed on a torque of the front wheels distributed from a required torque. When the output limitation for overheat protection is imposed, the electric vehicle is not driven by the required torque because a part of a torque that the front wheels and the rear wheels should originally output in total is cut off.

That is, when a four-wheel drive electric vehicle is driven with the torque distribution for suppressing power consumption, depending on the driving scene, the electric vehicle may not be driven with the required torque in order to protect the drive system from overheating.

An object of the present invention is to provide a method for controlling an electric vehicle and a device for controlling an electric vehicle that can protect a drive system from overheating and can be driven with a required torque even when a torque distribution is adjusted to a distribution for suppressing power consumption.

An aspect of the present invention is a method for controlling an electric vehicle, the electric vehicle having a power consumption suppression mode with a priority given to suppression of power consumption and a driving performance mode with a priority given to driving performance as a control mode for distributing a required torque to a front torque that is a torque generated in a front wheel and a rear torque that is a torque generated in a rear wheel and adjusting the distribution of the required torque. In the method for controlling an electric vehicle, in the power consumption suppression mode, the required torque is distributed more to either the front torque or the rear torque, and in the driving performance mode, the front torque or the rear torque to which the required torque is distributed more in the power consumption suppression mode is reduced. In addition, a temperature of one drive system of a front drive system for driving the front wheel and a rear drive system for driving the rear wheel is acquired, the one drive system corresponding to the front torque or the rear torque to which the required torque is distributed more in the power consumption suppression mode. The front torque or the rear torque to which the required torque is distributed more in the power consumption suppression mode is limited by setting, for the front torque or the rear torque to which the required torque is distributed more in the power consumption suppression mode, an upper limit value corresponding to the temperature of the corresponding drive system. Further, when the control mode is the power consumption suppression mode, the control mode is switched to the driving performance mode after the upper limit value decreases and before the front torque or the rear torque to which the required torque is distributed more in the power consumption suppression mode is limited to the upper limit value.

### BRIEF DESCRIPTION OF DRAWINGS

[FIG. 1] FIG. 1 is an explanatory diagram illustrating a configuration of an electric vehicle.
[FIG. 2] FIG. 2 is a block diagram illustrating a configuration of a controller related to a torque distribution.
[FIG. 3] FIG. 3 is a block diagram illustrating a configuration of a torque distribution unit.
[FIG. 4] FIG. 4 is a block diagram illustrating a configuration of an output limit calculation unit.
[FIG. 5] FIG. 5 is a schematic graph illustrating an aspect of an output limitation based on a temperature of a front motor.
[FIG. 6] FIG. 6 is a schematic graph illustrating an aspect of an output limitation based on a temperature of a front inverter.
[FIG. 7] FIG. 7 is a flowchart when a power consumption suppression mode is cancelled and a control mode is switched to a driving performance mode.
[FIG. 8] FIG. 8 is a flowchart in a case of returning to the power consumption suppression mode.
[FIG. 9] FIG. 9 is a graph schematically illustrating changes in temperature and torque of each motor, as well as changes in vehicle speed, in an electric vehicle of a comparative example.
[FIG. 10] FIG. 10 is a graph schematically illustrating changes in temperature and torque of each motor, as well as changes in vehicle speed, in an electric vehicle according to the present embodiment.
[FIG. 11] FIG. 11 is a graph schematically illustrating changes in temperature and torque of each motor, as well as changes in vehicle speed in the case of returning to the power consumption suppression mode, in the electric vehicle according to the present embodiment.

### DESCRIPTION OF EMBODIMENTS

Hereinafter, embodiments of the present invention will be described with reference to the drawings.

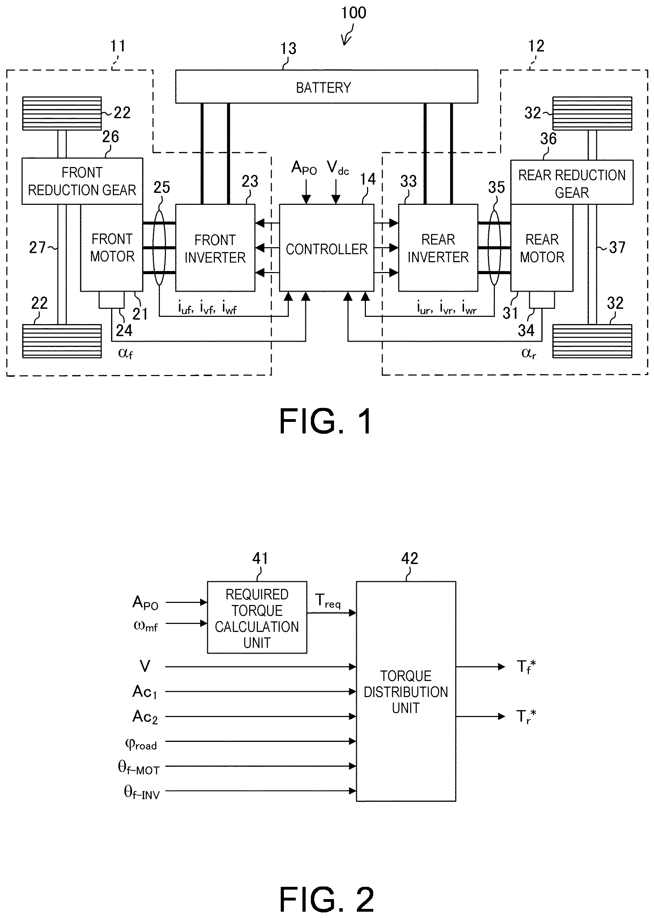

FIG. 1 is an explanatory diagram illustrating a configuration of an electric vehicle 100. The electric vehicle 100 is an electric four-wheel drive vehicle that drives front wheels 22 and rear wheels 32, which are drive wheels, using an electric motor. In addition, the electric vehicle 100 can adjust a distribution (hereinafter, referred to as a torque distribution) between a front torque T_{f} that is a torque (driving force) generated in the front wheels 22 and a rear torque Tᵣ that is a torque (driving force) generated in the rear wheels 32. Therefore, the electric vehicle 100 may be substantially in a two-wheel drive state depending on the torque distribution.

As illustrated in FIG. 1, the electric vehicle 100 includes a front drive system 11, a rear drive system 12, a battery 13, and a controller 14.

The front drive system 11 is a system that drives the front wheels 22 by a front motor 21. The front drive system 11 includes a front inverter 23, a rotation sensor 24, a current sensor 25, and the like in addition to the front motor 21 and the front wheels 22.

The front motor 21 is, for example, a three-phase AC synchronous electric motor, and is driven by DC power input from the front inverter 23. An output torque (front torque T_{f}) of the front motor 21 generates a torque (driving force) in the front wheels 22. The front motor 21 generates a so-called regenerative torque when a drive shaft thereof is rotated by the front wheels 22. Therefore, the front motor 21 can recover kinetic energy of the electric vehicle 100 as electric energy.

The front wheels 22 are a pair of drive wheels disposed at a front side of the electric vehicle 100. The front wheels 22 are connected to the front motor 21 via a front reduction gear 26 and a drive shaft 27. In the present embodiment, the front wheels 22 include a right front wheel and a left front wheel. However, since the right front wheel and the left front wheel are coupled by the drive shaft 27 and are integrally driven, in the present embodiment, the right front wheel and the left front wheel are not distinguished from each other, and are collectively referred to as the front wheels 22. The front wheels 22 are first drive wheels in comparison with the rear wheels 32 which are other drive wheels.

The front inverter 23 includes two pairs of switching elements for each phase of the front motor 21. The front inverter 23 turns on and off these switching elements according to a pulse width modulation (PWM) signal input from the controller 14. Accordingly, the front inverter 23 converts DC power supplied from the battery 13 into AC power, and inputs the AC power to the front motor 21 to drive the front motor 21. The switching elements constituting the front inverter 23 are, for example, power semiconductor elements such as insulated gate bipolar transistors (IGBT) or metal oxide film semiconductor field-effect transistors (MOS-FET). During regenerative control, the front inverter 23 converts AC power generated by the front motor 21 into DC power and inputs the DC power to the battery 13.

The rotation sensor 24 detects a rotor phase α_{f} of the front motor 21. The rotor phase α_{f} is a so-called electric angle [rad]. The rotation sensor 24 is, for example, a resolver or an encoder. The detected rotor phase α_{f} is input to the controller 14.

The current sensor 25 detects currents i_{uf}, i_{vf}, and i_{wf} flowing through the respective phases of the front motor 21 (hereinafter referred to as currents of three phases). The currents i_{uf}, i_{vf}, and i_{wf} of three phases of the front motor 21 are input to the controller 14.

The rear drive system 12 is a system that drives the rear wheels 32 by a rear motor 31, and is configured symmetrically to the front drive system 11. Therefore, in addition to the rear motor 31 and the rear wheels 32, the rear drive system 12 includes a rear inverter 33, a rotation sensor 34, a current sensor 35, a rear reduction gear 36, and a drive shaft 37. These units of the rear drive system 12 function in the same manner as the units of the front drive system 11. That is, the rear wheels 32 are a pair of drive wheels disposed at a rear side of the electric vehicle 10. The rear wheels 32 include a right rear wheel and a left rear wheel, but in the present embodiment, the right rear wheel and the left rear wheel are not distinguished from each other, and are collectively referred to as the rear wheels 32. The rear wheels 32 are second drive wheels in comparison with the front wheels 22 which are other drive wheels. A rotor phase of the rear drive system 12 detected by the rotation sensor 34 is αᵣ. The currents flowing through the respective phases of the rear motor 31 detected by the current sensor 35 are iᵤᵣ, iᵥᵣ, and i_{wr}.

The battery 13 is provided in common in the front drive system 11 and the rear drive system 12, and supplies electric power for driving the front motor 21 and the rear motor 31. During regenerative control, the battery 13 is charged with regenerative power generated by the front motor 21 and the rear motor 31.

The controller 14 is a control device of the electric vehicle 100. The controller 14 is implemented by, for example, one or more computers including a central processing unit (CPU), a read-only memory (ROM), a random access memory (RAM), an input/output interface (I/O interface), and the like. The controller 14 is programmed to control the front motor 21, the rear motor 31, and the like at a predetermined control cycle. For example, the controller 14 acquires various vehicle variables and generates PWM signals for driving the front motor 21 and the rear motor 31 based on these vehicle variables. Then, the controller 14 drives the front motor 21 and the rear motor 31 according to the vehicle variables by inputting the generated PWM signals to the front inverter 23 and the rear inverter 33.

The vehicle variables are parameters representing a control state of the electric vehicle 10. As described above, the controller 14 acquires, as the vehicle variables, for example, the rotor phase α_{f} and the currents i_{uf}, i_{vf}, and i_{wf} of three phases of the front motor 21, and the rotor phase αᵣ and the currents iᵤᵣ, iᵥᵣ, and i_{wr} of three phases of the rear motor 31.

In addition, the controller 14 acquires, for example, an accelerator opening Aₚₒ and a DC voltage V_{dc} of the battery 13 as the vehicle variables. The accelerator opening Aₚₒ is a parameter representing an operation amount on an accelerator pedal by a driver. The accelerator opening Aₚₒ and the DC voltage V_{dc} of the battery 13 are appropriately detected as necessary using, for example, sensors (not illustrated).

In addition, the controller 14 acquires, as the vehicle variables, an acceleration generated in the electric vehicle 100, a temperature of the front drive system 11, a temperature of the rear drive system 12, a gradient of a road surface on which the electric vehicle 100 travels (hereinafter, referred to as a road surface gradient ψ_{road}), and the like.

More specifically, the controller 14 acquires, as the acceleration generated in the electric vehicle 100, an acceleration in a longitudinal direction generated by acceleration and deceleration (hereinafter, referred to as a longitudinal acceleration Ac₁) and an acceleration in a lateral direction generated by turning (hereinafter, referred to as a lateral acceleration Ac₂). The longitudinal acceleration Ac₁ and the lateral acceleration Ac₂ are appropriately detected as necessary using, for example, an acceleration sensor (not illustrated).

The controller 14 acquires, as the temperature of the front drive system 11, a temperature of each unit of the front drive system 11, such as a temperature θ_{f-MOT} of the front motor 21 and a temperature θ_{f-INV} of the front inverter 23. More practically, the temperature of the front motor 21 is individually acquired for each part of the front motor 21, such as a temperature of a permanent magnet in a rotor and a temperature of a stator coil constituting a stator. However, in the present embodiment, for simplicity, the temperatures of these parts are represented by the temperature θ_{f-MOT} of the front motor 21. Similarly, for the front inverter 23, for example, a temperature of each switching element can be acquired, but in the present embodiment, for simplicity, a temperature of each of parts constituting the front inverter 23 is represented by the temperature θ_{f-INV} of the front inverter 23. In the present embodiment, the temperatures of the parts that constitute the front drive system 11, such as the front motor 21 and the front inverter 23, are simply collectively referred to as the temperature of the front drive system 11. The temperature θ_{f-MOT} of the front motor 21 and the temperature θ_{f-INV} of the front inverter 23 are appropriately detected using a temperature sensor (not illustrated) as necessary, or are estimated by calculation using the vehicle variables.

Similarly to the temperature of the front drive system 11, the controller 14 can acquire a temperature θ_{r-MOT} of the rear motor 31 and a temperature θ_{r-INV} of the rear inverter 33 as the temperature of the rear drive system 12. The temperature θ_{r-MOT} of the rear motor 31 and the temperature θ_{r-INV} of the rear inverter 33 are appropriately detected using a temperature sensor (not illustrated) as necessary, and are estimated by calculation using the vehicle variables.

The controller 14 can acquire the road surface gradient ψ_{road} based on, for example, information on a scheduled driving route registered in advance in a car navigation system and a current location of the electric vehicle 100 specified by a global positioning system (GPS).

In principle, the controller 14 in the present embodiment directly acquires the vehicle variables using various sensors, but the controller 14 can acquire some or all of the vehicle variables from another controller (computer) (not illustrated).

Further, the controller 14 can acquire a new vehicle variable by the calculation using the acquired vehicle variables. For example, the controller 14 calculates a rotation angular velocity ω_{mf} [rad/s] of the front motor 21 and a rotation angular velocity ωₘᵣ [rad/s] of the rear motor 31. The rotation angular velocity ω_{mf} of the front motor 21 is a mechanical angular velocity, and is calculated by differentiating the rotor phase α_{f} and dividing the differentiating result by the number of pole pairs of the front motor 21. Similarly, the rotation angular velocity ωₘᵣ of the rear motor 31 is a mechanical angular velocity, and is calculated by differentiating the rotor phase αᵣ and dividing the differentiating result by the number of pole pairs of the rear motor 31. In the present embodiment, the controller 14 acquires a vehicle speed V [km/h] of the electric vehicle 100 by converting the rotation angular velocity ω_{mf} [rad/s] of the front motor 21.

FIG. 2 is a block diagram illustrating a configuration of the controller 14 related to a torque distribution. As illustrated in FIG. 2, the controller 14 includes a required torque calculation unit 41 and a torque distribution unit 42.

The required torque calculation unit 41 calculates an output torque required for the electric vehicle 100 (hereinafter, referred to as a required torque T_{req}) in response to a driver's operation of an accelerator pedal or the like. In the present embodiment, the required torque calculation unit 41 calculates the required torque T_{req} based on the accelerator opening A_{PO} and the rotation angular velocity ω_{mf} of the front motor 21. The required torque calculation unit 41 calculates the required torque T_{req} corresponding to the accelerator opening A_{PO} and the rotation angular velocity ω_{mf} of the front motor 21 with reference to a map in which the accelerator opening A_{PO} and the rotation angular velocity ω_{mf} of the front motor 21 are associated with the required torque T_{req}.

The torque distribution unit 42 calculates a front torque command value T_{f}* for commanding the front torque T_{f} and a rear torque command value Tᵣ* for commanding the rear torque Tᵣ based on the required torque T_{req}. The controller 14 causes the front motor 21 to output the front torque T_{f} and causes the rear motor 31 to output the rear torque Tr based on the front torque command value T_{f}* and the rear torque command value Tᵣ*. That is, the torque distribution unit 42 distributes the required torque T_{req} to the front torque T_{f} and the rear torque Tᵣ.

In the present embodiment, the electric vehicle 100 has two control modes, that is, a power consumption suppression mode and a driving performance mode, as a control mode for adjusting the distribution of the required torque T_{req} to the front torque T_{f} and the rear torque Tᵣ, that is, the torque distribution.

The power consumption suppression mode is a control mode in which the torque distribution unit 42 performs a torque distribution with a priority given to suppression of power consumption (electricity cost). Specifically, when the control mode is the power consumption suppression mode, the torque distribution unit 42 suppresses the power consumption by adjusting the torque distribution such that the electric vehicle 100 is in a two-wheel drive state (or a state close thereto) in which the electric vehicle 100 is driven by either the front wheels 22 or the rear wheels 32. In the present embodiment, when the control mode is the power consumption suppression mode, the torque distribution unit 42 distributes the required torque T_{req} to the front torque T_{f} more than the rear torque Tᵣ, and substantially brings about a two-wheel drive state in which the electric vehicle 100 is driven by the front wheels 22. That is, in the present embodiment, the torque distribution in the power consumption suppression mode is T_{f} : Tᵣ ≈ 100: 0 in principle. However, the torque distribution unit 42 further adjusts the torque distribution in the power consumption suppression mode based on the vehicle speed V.

The driving performance mode is a control mode in which the torque distribution unit 42 performs a torque distribution with a priority given to driving performance. Specifically, when the control mode is the driving performance mode, the torque distribution unit 42 improves the driving performance of the electric vehicle 100 by adjusting the torque distribution such that the electric vehicle 100 is in a four-wheel drive state (or a state close thereto). Therefore, when the control mode is the driving performance mode, the torque distribution unit 42 distributes the required torque T_{req} less to the front torque T_{f} and more to the rear torque Tᵣ, as compared to the power consumption suppression mode. In the present embodiment, the torque distribution in the driving performance mode is T_{f} : Tᵣ = 50: 50 in principle. However, the torque distribution unit 42 further adjusts the torque distribution in the driving performance mode based on the longitudinal acceleration Ac₁, the lateral acceleration Ac₂, the road surface gradient ψ_{road}, and the like.

The control mode related to the torque distribution is set by the driver using a control switch or the like (not illustrated). In the present embodiment, the control mode is set to the power consumption suppression mode in principle. When the driving performance mode is explicitly set using the control switch or the like, the control mode is set to the driving performance mode.

However, even when the power consumption suppression mode is selected, the torque distribution unit 42 (controller 14) may automatically and forcibly cancel the power consumption suppression mode. That is, the torque distribution unit 42 may switch the control mode from the power consumption suppression mode to the driving performance mode. This is to protect the front drive system 11 from overheating while maintaining a sum of the front torque T_{f} and the rear torque Tᵣ (hereinafter referred to as a total torque ΣT) to be equal to the required torque T_{req}.

This automatic and forced change in the control mode is temporary in principle. When the damage of the front drive system 11 due to overheating is reduced, the torque distribution unit 42 (controller 14) automatically returns the control mode to the power consumption suppression mode. That is, in a case where the torque distribution unit 42 automatically switches the control mode to the driving performance mode regardless of the selection of the driver, when it is not necessary to maintain the driving performance mode, the torque distribution unit 42 automatically switches the control mode from the temporarily set driving performance mode to the original power consumption suppression mode.

The torque distribution unit 42 automatically switches the control mode based on the temperature of the front drive system 11 or the rear drive system 12. In the present embodiment, when the control mode is the power consumption suppression mode, the front drive system 11 may intensively operate, and may be at risk of overheating depending on the driving scene. Therefore, the torque distribution unit 42 automatically switches the control mode based on the temperature of the front drive system 11. In addition, in the front drive system 11, particularly the front motor 21 and the front inverter 23 may be at risk of overheating due to the power consumption suppression mode. Therefore, the torque distribution unit 42 automatically switches the control mode based on, in particular, the temperature θ_{f-MOT} of the front motor 21 and the temperature θ_{f-INV} of the front inverter 23.

As described above, the electric vehicle 100 is substantially in the two-wheel drive state by selecting the power consumption suppression mode, and the electric vehicle 100 is substantially in the four-wheel drive state by selecting the driving performance mode. Therefore, in the present embodiment, switching of the control mode related to the torque distribution corresponds to switching between two-wheel drive and four-wheel drive. However, the power consumption suppression mode does not necessarily require the vehicle to be in the two-wheel drive state strictly or all the time. In the power consumption suppression mode, the torque distribution may be adjusted to T_{f} : Tᵣ = 80:20.

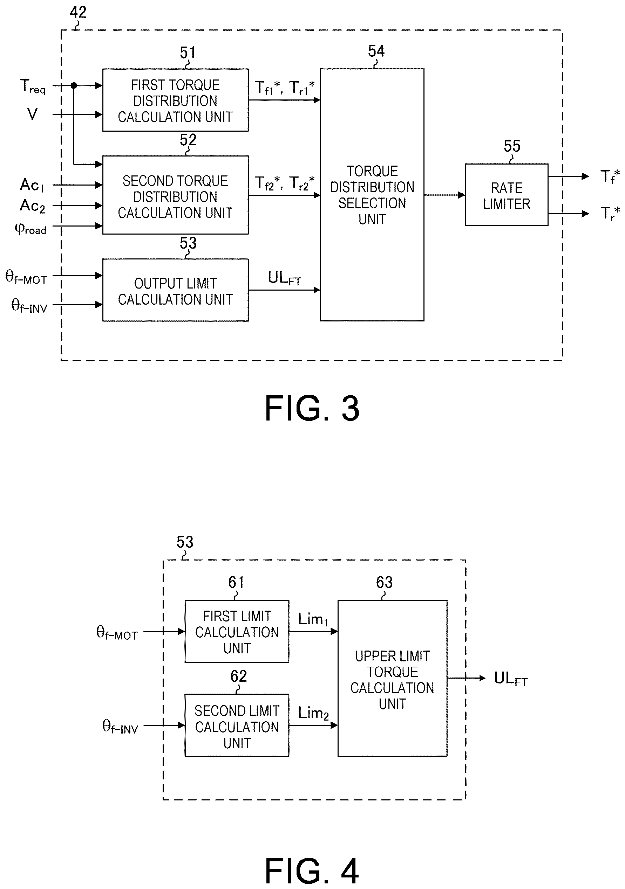

FIG. 3 is a block diagram illustrating a configuration of the torque distribution unit 42. As illustrated in FIG. 3, a first torque distribution calculation unit 51, a second torque distribution calculation unit 52, an output limit calculation unit 53, a torque distribution selection unit 54, and a rate limiter 55 are provided.

The first torque distribution calculation unit 51 calculates a first front torque command value T_{f1}* and a first rear torque command value Tᵣ₁* based on the required torque T_{req} and the vehicle speed V. The first front torque command value T_{f1}* and the first rear torque command value Tᵣ₁* are command values for the front torque T_{f} and the rear torque Tᵣ when the required torque T_{req} is distributed by the torque distribution in the power consumption suppression mode. That is, the first torque distribution calculation unit 51 calculates a torque command value for the power consumption suppression mode.

As described above, in the present embodiment, the torque distribution in the power consumption suppression mode is T_{f} : Tᵣ ≈ 100: 0. Therefore, the first front torque command value T_{f1}* substantially corresponds to the required torque T_{req}, and the first rear torque command value Tᵣ₁* is substantially zero. However, the first torque distribution calculation unit 51 calculates a first front torque command value T_{f1}* and a first rear torque command value Tᵣ₁* for suppressing power consumption more actually by correcting the first front torque command value T_{f1}* and the first rear torque command value Tᵣ₁* according to the vehicle speed V. Hereinafter, the first front torque command value T_{f1}* and the first rear torque command value Tᵣ₁* are referred to as torque command values for the power consumption suppression mode (T_{f1}*, Tᵣ₁*).

The second torque distribution calculation unit 52 calculates a second front torque command value T_{f2}* and a second rear torque command value Tᵣ₂* based on the required torque T_{req}, the longitudinal acceleration Ac₁, the lateral acceleration Ac₂, and the road surface gradient ψ_{road}. The second front torque command value T_{f2}* and the second rear torque command value Tᵣ₂* are command values for the front torque T_{f} and the rear torque Tᵣ when the required torque T_{req} is distributed by the torque distribution in the driving performance mode. That is, the second torque distribution calculation unit 52 calculates a torque command value for the driving performance mode.

As described above, in the present embodiment, the torque distribution in the driving performance mode is T_{f} : Tᵣ = 50: 50 in principle. Therefore, the second front torque command value T_{f2}* and the second rear torque command value Tᵣ₂* are approximately 1/2 of the required torque T_{req}. However, the second torque distribution calculation unit 52 calculates a second front torque command value T_{f2}* and a second rear torque command value Tᵣ₂* for improving the driving performance more actually by correcting the second front torque command value T_{f2}* and the second rear torque command value Tᵣ₂* according to the longitudinal acceleration Ac₁, the lateral acceleration Ac₂, and the road surface gradient ψ_{road}. Hereinafter, the second front torque command value T_{f2}* and the second rear torque command value Tᵣ₂* are referred to as torque command values for the driving performance mode (T_{f2}*, Tᵣ₂*).

The output limit calculation unit 53 calculates an output limitation to be imposed on the front torque T_{f} or the rear torque Tᵣ in order to prevent damage due to overheating based on the temperature of the front drive system 11 or the temperature of the rear drive system 12. In the present embodiment, when the control mode is the power consumption suppression mode, the front drive system 11 may intensively operate, and may be at risk of overheating depending on the driving scene. Therefore, the output limit calculation unit 53 calculates an upper limit value (hereinafter, referred to as an upper limit torque UL_{FT}) set for the distributed front torque T_{f} for overheat protection based on the temperature θ_{f-MOT} of the front motor 21 and the temperature θ_{f-INV} of the front inverter 23.

The upper limit torque UL_{FT} is a variable value and varies according to changes in the temperature θ_{f-MOT} of the front motor 21 and the temperature θ_{f-INV} of the front inverter 23. Specifically, the upper limit torque UL_{FT} is substantially equal to a maximum output torque of the front motor 21 when the upper limit torque UL_{FT} does not exceed a heat resistance temperature of the front motor 21 or the front inverter 23. On the other hand, when the temperature θ_{f-MOT} of the front motor 21 exceeds the heat resistance temperature of the front motor 21, or when the temperature θ_{f-INV} of the front inverter 23 exceeds the heat resistance temperature of the front inverter 23, the upper limit torque UL_{FT} decreases to a value smaller than the maximum output torque of the front motor 21. A method of setting the upper limit torque UL_{FT} based on the temperature θ_{f-MOT} of the front motor 21 and the temperature θ_{f-INV} of the front inverter 23 will be described in detail later.

The upper limit torque UL_{FT} is used to limit a final output of the distributed front torque T_{f}. In addition, in the present embodiment, the upper limit torque UL_{FT} is used as a criterion for determining whether to automatically and forcibly cancel the power consumption suppression mode and switch the control mode from the power consumption suppression mode to the driving performance mode. In the present embodiment, the upper limit torque UL_{FT} is used as a criterion for determining whether to automatically return the control mode to the power consumption suppression mode.

The torque distribution selection unit 54 selects and outputs either the torque command values for the power consumption suppression mode (T_{f1}*, Tᵣ₁*) or the torque command values for the driving performance mode (T_{f2}*, Tᵣ₂*) as torque command values used for control on the electric vehicle 100. Accordingly, the torque distribution selection unit 54 selects the torque distribution to be applied in the control on the electric vehicle 100.

When the driving performance mode is set by the driver, the torque distribution selection unit 54 selects the torque command values for the driving performance mode (T_{f2}*, Tᵣ₂*) as the torque command values used for the control on the electric vehicle 100. Accordingly, the torque distribution selection unit 54 sets the torque distribution of the electric vehicle 100 to the torque distribution in the driving performance mode. In this case, the control mode is the driving performance mode.

When the power consumption suppression mode is set by the driver, or when the driving performance mode is not explicitly selected, the torque distribution selection unit 54 selects the torque command values for the power consumption suppression mode (T_{f1}*, Tᵣ₁*) as the torque command values used for the control on the electric vehicle 100. Accordingly, the torque distribution selection unit 54 sets the torque distribution of the electric vehicle 100 to the torque distribution in the power consumption suppression mode. In this case, the control mode is the power consumption suppression mode. "When the driving performance mode is not explicitly selected" refers to a case where the control mode is initially set or automatically set, and thus the driver does not need to set both the power consumption suppression mode and the driving performance mode, a case where the driving performance mode can be set by an operation button (not illustrated) but the operation button is not operated, and the like. That is, even when the power consumption suppression mode is not set by the driver, the power consumption suppression mode may be automatically set when the driver does not set the driving performance mode.

Furthermore, in the present embodiment, when the control mode is the power consumption suppression mode, the torque distribution selection unit 54 may automatically and forcibly switch the control mode to the driving performance mode according to a change in the upper limit torque UL_{FT}.

Specifically, the torque distribution selection unit 54 switches the control mode to the driving performance mode after the upper limit torque UL_{FT} decreases according to a change in the temperature of the front drive system 11 and before the output of the front torque T_{f} is limited to the upper limit torque UL_{FT}.

In the present embodiment, the upper limit torque UL_{FT} is a criterion for determining whether to cancel the power consumption suppression mode and switch to the driving performance mode. The torque distribution selection unit 54 sets a first threshold TH₁ for the upper limit torque UL_{FT}, and cancels the power consumption suppression mode and switches to the driving performance mode when the upper limit torque UL_{FT} is equal to or less than the first threshold TH₁. The first threshold TH₁ is a threshold (power consumption suppression mode cancellation threshold) for determining whether to cancel the power consumption suppression mode.

As described above, when the front motor 21 and the front inverter 23 may exceed the heat resistance temperature, the upper limit torque UL_{FT} decreases from the maximum output torque of the front motor 21. The first threshold TH₁ is set to detect the risk that the front motor 21 and the front inverter 23 exceed the heat resistance temperature. Therefore, the first threshold TH₁ is set to, for example, a value close to the maximum output torque of the front motor 21 in a range lower than the maximum output torque. A specific value of the first threshold TH₁ is determined in advance by experiments, simulations, or the like.

Furthermore, in the present embodiment, when the control mode is automatically and forcibly switched from the power consumption suppression mode to the driving performance mode, the torque distribution selection unit 54 may automatically return the control mode to the power consumption suppression mode.

Specifically, when it is determined that the upper limit torque UL_{FT} increases according to the temperature of the front drive system 11 and the front motor 21 and the front inverter 23 no longer exceed the heat resistance temperature, the torque distribution selection unit 54 automatically returns the control mode to the power consumption suppression mode.

In the present embodiment, the torque distribution selection unit 54 sets a second threshold TH₂ for the upper limit torque UL_{FT}, and returns the control mode to the power consumption suppression mode when the upper limit torque UL_{FT} is equal to or greater than the second threshold TH₂. The second threshold TH₂ is a threshold (power consumption suppression mode returning threshold) serving as a return condition to the power consumption suppression mode. Therefore, the second threshold TH₂ is set to a value equal to or greater than the first threshold TH₁ and equal to or less than the maximum output torque of the front motor 21. In particular, in the present embodiment, the second threshold TH₂ is set to a value larger than the first threshold TH₁. Accordingly, since the automatic switching and returning of the control mode have hysteresis, hunting is suppressed. That is, it is difficult to repeat switching and returning of the control mode in a short period. A specific value of the second threshold TH₂ is determined in advance by experiments, simulations, or the like.

The rate limiter 55 limits change rates of the front torque T_{f} and the rear torque Tᵣ. Specifically, the rate limiter 55 limits a change amount per unit time for the torque command values for the power consumption suppression mode (T_{f1}*, Tᵣ₁*) or the torque command values for the driving performance mode (T_{f2}*, Tᵣ₂*) output from the torque distribution selection unit 54. Accordingly, the rate limiter 55 smoothly changes the front torque T_{f} and the rear torque Tᵣ.

In the present embodiment, the rate limiter 55 functions when the control mode is switched from the power consumption suppression mode to the driving performance mode and then the control mode returns to the power consumption suppression mode. That is, in the present embodiment, the rate limiter 55 limits the change rates of the front torque T_{f} and the rear torque Tᵣ when the torque distribution selection unit 54 substantially switches the control mode. As a result, even at the start of driving or during driving, the control mode is smoothly switched without causing vibration or the like in the electric vehicle 100.

FIG. 4 is a block diagram illustrating a configuration of the output limit calculation unit 53. As illustrated in FIG. 4, the output limit calculation unit 53 includes a first limit calculation unit 61, a second limit calculation unit 62, and an upper limit torque calculation unit 63.

The first limit calculation unit 61 calculates an upper limit value of the front torque T_{f} (hereinafter, referred to as a first upper limit torque Lim₁) based on the temperature θ_{f-MOT} of the front motor 21. The first upper limit torque Lim₁ is a limiter to be imposed on the front torque T_{f} in order to prevent the front motor 21 from becoming overheated.

The second limit calculation unit 62 calculates an upper limit value of the front torque T_{f} (hereinafter, referred to as a second upper limit torque Lim₂) based on the temperature θ_{f-INV} of the front inverter 23. The second upper limit torque Lim₂ is a limiter to be imposed on the front torque T_{f} in order to prevent the front inverter 23 from becoming overheated.

The upper limit torque calculation unit 63 outputs a smaller one of the first upper limit torque Lim₁ and the second upper limit torque Lim₂ as a final upper limit torque UL_{FT} to be imposed on the front torque T_{f}. This prevents both the front motor 21 and the front inverter 23 from becoming overheated.

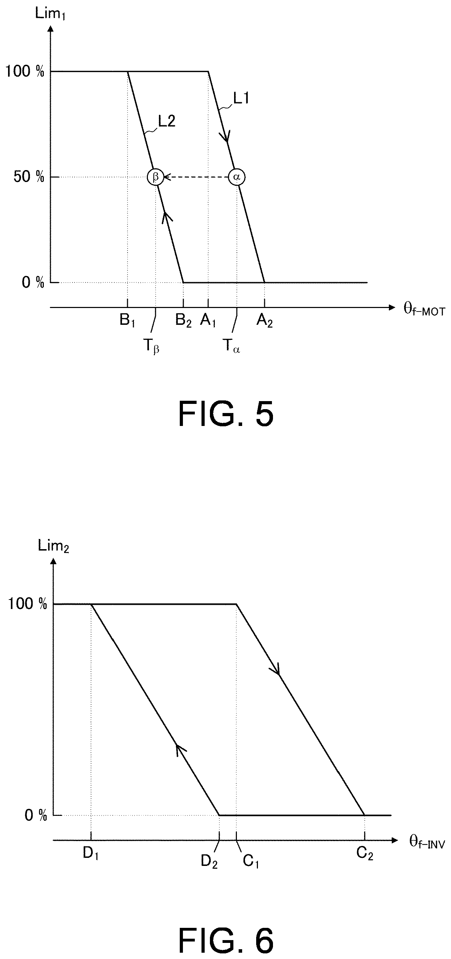

FIG. 5 is a schematic graph illustrating an aspect of an output limitation based on the temperature θ_{f-MOT} of the front motor 21. As illustrated in FIG. 5, when the temperature θ_{f-MOT} of the front motor 21 is sufficiently low to the extent that the overheat protection is not necessary, the first upper limit torque Lim₁ is 100%. Therefore, from the viewpoint of protecting the front motor 21 from overheating, the front motor 21 can output the maximum front torque T_{f} as much as possible.

In a case where the temperature θ_{f-MOT} of the front motor 21 increases from the temperature sufficiently low to the extent that the overheat protection is not necessary, when the temperature θ_{f-MOT} of the front motor 21 exceeds a temperature A₁, the first upper limit torque Lim₁ is set to gradually decrease along a line L₁ according to the temperature θ_{f-MOT} of the front motor 21. Therefore, when the temperature θ_{f-MOT} of the front motor 21 exceeds the temperature A₁, the front torque T_{f} that can be output is limited from the viewpoint of protecting the front motor 21 from overheating.

In particular, in the present embodiment, when the temperature θ_{f-MOT} of the front motor 21 becomes equal to or higher than a temperature A₂, the first upper limit torque Lim₁ becomes 0%. Therefore, when the temperature θ_{f-MOT} of the front motor 21 becomes equal to or higher than the temperature A₂, the front motor 21 cannot output a torque in order to protect the front motor 21 from overheating. The temperatures A₁, A₂ and the shape of the line L₁ are determined in advance according to a specific heat removal property of the front motor 21.

On the other hand, in a case where the temperature θ_{f-MOT} of the front motor 21 decreases from the state in which the first upper limit torque Lim₁ becomes 0%, when the temperature θ_{f-MOT} of the front motor 21 falls below a temperature B₂, the first upper limit torque Lim₁ is set to gradually increase along a line L₂ according to the temperature θ_{f-MOT} of the front motor 21. When the temperature θ_{f-MOT} of the front motor 21 becomes equal to or lower than the temperature B₁ along the line L₂, the first upper limit torque Lim₁ is set to return to 100%.

The temperature B₂ is set to be equal to or lower than the temperature A₂ at least, and may be set to a value equal to the temperature A₂. The line L₂ may be set equal to the line L₁. However, in the present embodiment, the temperature B₂ is set to a value smaller than the temperature A₂ at least, and as a result, the line L₂ is different from the line L₁. Accordingly, the first upper limit torque Lim₁ has hysteresis with respect to the temperature θ_{f-MOT} of the front motor 21. Thus, the reason why the first upper limit torque Lim₁ has hysteresis is that the first upper limit torque Lim₁ is used to determine whether to switch the control mode via the final upper limit torque UL_{FT}.

For example, in a case where the temperature θ_{f-MOT} of the front motor 21 is dominant in the switching of the control mode, when the temperature θ_{f-MOT} of the front motor 21 exceeds the temperature A₁, the control mode is soon forcibly switched from the power consumption suppression mode to the driving performance mode. When the front torque T_{f} to be distributed is reduced as a result of the control mode being switched to the driving performance mode, a load on the front motor 21 is reduced, and the temperature θ_{f-MOT} of the front motor 21 starts to show a decreasing trend.

At this time, when the first upper limit torque Lim₁ does not have the hysteresis, the first upper limit torque Lim₁ increases along the line L₁. When the temperature θ_{f-MOT} of the front motor 21 reaches the temperature A₁ and the first upper limit torque Lim₁ returns to 100%, the control mode returns to the power consumption suppression mode. Therefore, the front torque T_{f} to be distributed increases, and the load on the front motor 21 increases. As a result, the temperature θ_{f-MOT} of the front motor 21 substantially starts to rise again from the temperature A₁. Therefore, in a case where the first upper limit torque Lim₁ does not have the hysteresis, even when the control mode returns to the power consumption suppression mode, the control mode may be forcibly switched to the driving performance mode again immediately after that.

That is, the reason why the first upper limit torque Lim₁ has the hysteresis is to suppress hunting related to automatic switching and returning of the control mode. The temperatures B₁, B₂ and the shape of the line L₂ are determined in advance by experiments, simulations, or the like.

When the temperature θ_{f-MOT} of the front motor 21 starts to decrease while the first upper limit torque Lim₁ decreases along the line L₁, the first upper limit torque Lim₁ is maintained at a value when the temperature θ_{f-MOT} of the front motor 21 starts to decrease until the first upper limit torque Lim₁ reaches a point on the line L₂ or returns to a point on the line L₁. For example, it is assumed that the first upper limit torque Lim₁ decreases along the line L₁, and the temperature θ_{f-MOT} of the front motor 21 starts to decrease from a temperature T_{α} at a point α. Thereafter, when the temperature θ_{f-MOT} of the front motor 21 further decreases, the temperature θ_{f-MOT} of the front motor 21 becomes a temperature T_{β}, and a value (50%) of the first upper limit torque Lim₁ at the point α is maintained until the first upper limit torque Lim₁ reaches the point β on the line L₂. This is to suppress hunting related to automatic switching and returning of the control mode.

Similarly, when the temperature θ_{f-MOT} of the front motor 21 starts to increase while the first upper limit torque Lim₁ increases along the line L₂, the first upper limit torque Lim₁ is maintained at a value when the temperature θ_{f-MOT} of the front motor 21 starts to increase until the first upper limit torque Lim₁ reaches a point on the line L₁ or returns to a point on the line L₂.

FIG. 6 is a schematic graph illustrating an aspect of an output limitation based on the temperature θ_{f-INV} of the front inverter 23. As illustrated in FIG. 6, the second upper limit torque Lim₂ is set according to the characteristics of the front inverter 23 on the same principle as the first upper limit torque Lim₁.

When the temperature θ_{f-INV} of the front inverter 23 increases, a temperature C₁ at which the second upper limit torque Lim₂ starts to decrease from 100%, a minimum temperature C₂ at which the second upper limit torque Lim₂ is set to 0%, and a shape of a line between the temperatures C₁ and C₂ are set in advance according to the heat resistance temperature of the front inverter 23 (particularly, the switching elements). In addition, when the temperature θ_{f-INV} of the front inverter 23 decreases, a temperature D₂ at which the second upper limit torque Lim₂ starts to increase from 0%, a temperature D₁ at which the second upper limit torque Lim₂ returns to 100%, and a shape of a line between the temperatures D₁ and D₂ are determined in advance through experiments, simulations, or the like so as to suppress hunting related to automatic switching and returning of the control mode.

Hereinafter, an operation of automatically switching and returning the control mode in the electric vehicle 100 configured as described above will be described. Hereinafter, it is assumed that the driving performance mode is not set by the driver, and the control mode is the power consumption suppression mode in principle.

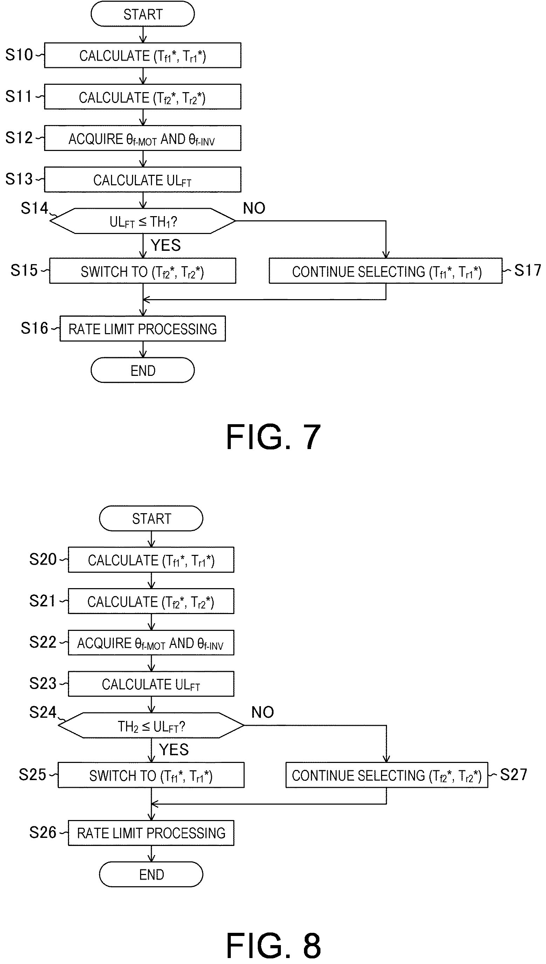

FIG. 7 is a flowchart when the power consumption suppression mode is cancelled and the control mode is switched to the driving performance mode. As illustrated in FIG. 7, in step S10, the first torque distribution calculation unit 51 calculates torque command values for the power consumption suppression mode (T_{f1}*, Tᵣ₁*). In step S11, the second torque distribution calculation unit 52 calculates the torque command values for the driving performance mode (T_{f2}*, Tᵣ₂*). In step S12, the temperature θ_{f-MOT} of the front motor 21 and the temperature θ_{f-INV} of the front inverter 23 are acquired. In step S13, the output limit calculation unit 53 calculates the upper limit torque UL_{FT} based on the temperature θ_{f-MOT} of the front motor 21 and the temperature θ_{f-INV} of the front inverter 23.

Thereafter, in step S14, the torque distribution selection unit 54 compares the upper limit torque UL_{FT} with the first threshold TH₁. If it is determined in step S14 that the upper limit torque UL_{FT} is equal to or less than the first threshold TH₁, the process proceeds to step S15, and the torque distribution selection unit 54 switches the torque command values to be output as the front torque command value T_{f}* and the rear torque command value Tᵣ* from the torque command values for the power consumption suppression mode (T_{f1}*, Tᵣ₁*) to the torque command values for the driving performance mode (T_{f2}*, Tᵣ₂*). In step S16, the rate limiter 55 performs rate limit processing to make this switching smooth.

Accordingly, in order to protect the front drive system 11 from overheating, the control mode related to the torque distribution is automatically and forcibly switched to the driving performance mode before the front torque T_{f} is limited to the upper limit torque UL_{FT}. The distribution from the required torque T_{req} to the front torque T_{f} is reduced as compared with the case where the control mode remains in the power consumption suppression mode. As a result, the load on the front drive system 11 is reduced, and the heat generation is suppressed. Therefore, the front drive system 11 is properly protected from being overheated. In addition, even in the driving performance mode, since the required torque T_{req} is distributed to the front torque T_{f} and the rear torque Tᵣ without excess or deficiency, the electric vehicle 100 can continue to output the required torque T_{req} even when the control mode is switched.

If it is determined in step S14 that the upper limit torque UL_{FT} is larger than the first threshold TH₁, the possibility that the front drive system 11 falls into an overheating state is low even if the power consumption suppression mode is continued as it is. Therefore, the process proceeds to step S17, and the torque distribution selection unit 54 outputs the torque command values for the power consumption suppression mode (T_{f1}*, Tᵣ₁*) as the torque command values to be output as the front torque command value T_{f}* and the rear torque command value Tᵣ*. Accordingly, the power consumption suppression mode is continued.

FIG. 8 is a flowchart in a case of returning to the power consumption suppression mode. As illustrated in FIG. 8, even after the control mode is automatically switched from the power consumption suppression mode to the driving performance mode, the calculation of the torque command values for the power consumption suppression mode (T_{f1}*, Tᵣ₁*) is continued as illustrated in step S20. In step S21, the torque command values for the driving performance mode (T_{f2}*, Tᵣ₂*) are calculated. Similarly, in step S22, the temperature θ_{f-MOT} of the front motor 21 and the temperature θ_{f-INV} of the front inverter 23 are acquired, and in step S23, the upper limit torque UL_{FT} is calculated.

In step S24, the torque distribution selection unit 54 compares the upper limit torque UL_{FT} with the second threshold TH₂. If it is determined in step S24 that the upper limit torque UL_{FT} is equal to or greater than the second threshold TH₂, the process proceeds to step S25, and the torque command values to be output as the front torque command value T_{f}* and the rear torque command value Tᵣ* are switched to the torque command values for the power consumption suppression mode (T_{f1}*, Tᵣ₁*). In step S26, the rate limiter 55 performs the rate limit processing to make this switching smooth.

Accordingly, the control mode related to the torque distribution is switched to the power consumption suppression mode when the possibility that the front drive system 11 falls into an overheating state is reduced. Therefore, a period during which the control mode is forcibly switched to the driving performance mode is minimized, and power consumption is suppressed as long as the front drive system 11 is not at risk of overheating.

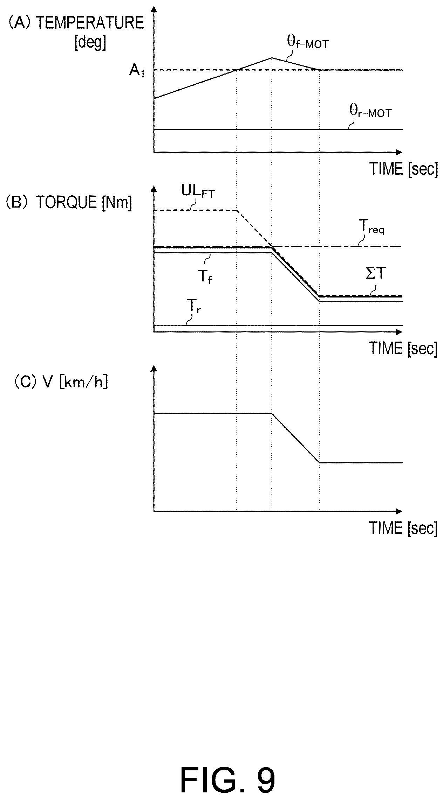

FIG. 9 is a graph schematically illustrating changes in temperature and torque of each motor, as well as changes in vehicle speed V, in an electric vehicle of a comparative example. The electric vehicle of the comparative example continues the power consumption suppression mode unless the driving performance mode is set by the driver. In the electric vehicle of the comparative example, when the overheat protection of the front drive system 11 is required, the front torque T_{f} (first front torque command value T_{f1}*) distributed by the torque distribution in the power consumption suppression mode is limited by the upper limit torque UL_{FT}. Hereinafter, for simplicity, it is assumed that the necessity of overheat protection is determined depending on the temperature θ_{f-MOT} of the front motor 21. Further, it is assumed that the accelerator opening degree A_{PO} is constant, and as a result, the required torque T_{req} is also constant.

In the electric vehicle of the comparative example, when the temperature θ_{f-MOT} of the front motor 21 increases and exceeds the temperature A₁ due to the continuation of the power consumption suppression mode as illustrated in FIG. 9(A), the upper limit torque UL_{FT} starts to decrease as illustrated in FIG. 9(B). When the upper limit torque UL_{FT} decreases to a value equal to or lower than the front torque T_{f} distributed from the required torque T_{req}, the front torque T_{f} is limited to the upper limit torque UL_{FT}. Accordingly, the load on the front motor 21 is forcibly reduced, and the heat generation is suppressed. As a result, the front motor 21 is protected from being overheated.

However, since the front torque T_{f} is limited to the upper limit torque UL_{FT}, the total torque ΣT, which is the sum of the front torque T_{f} and the rear torque Tᵣ, falls below the required torque T_{req}. Therefore, when the front motor 21 is protected from being overheated, the electric vehicle of the comparative example cannot continue to output the required torque T_{req}. As a result, as illustrated in FIG. 9(C), in the electric vehicle of the comparative example, when the front torque T_{f} starts to be limited to the upper limit torque UL_{FT}, the vehicle speed V decreases.

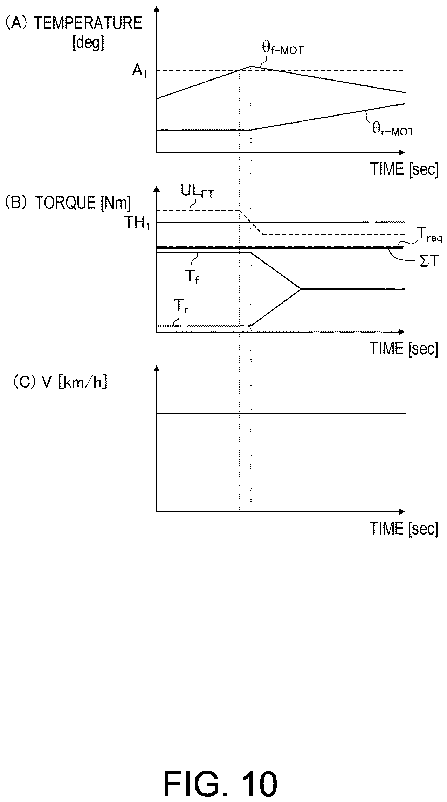

FIG. 10 is a graph schematically illustrating changes in temperature and torque of each motor, as well as changes in vehicle speed, in the electric vehicle 100 according to the present embodiment. Similarly to the electric vehicle of the comparative example, also in the electric vehicle 100 of the present embodiment, when the temperature θ_{f-MOT} of the front motor 21 increases and exceeds the temperature A₁ as illustrated in FIG. 10(A), the upper limit torque UL_{FT} starts to decrease as illustrated in FIG. 10(B).

Thereafter, in the electric vehicle of the comparative example, as described above, the front torque T_{f} is limited to the upper limit torque UL_{FT}, whereas in the electric vehicle 100 of the present embodiment, the control mode is switched from the power consumption suppression mode to the driving performance mode at a timing when the upper limit torque UL_{FT} becomes equal to or less than the first threshold TH₁ before the front torque T_{f} is limited to the upper limit torque UL_{FT}. Therefore, as illustrated in FIG. 10(B), the front torque T_{f} decreases, and the rear torque Tᵣ increases. As a result, accordingly, the load on the front motor 21 is forcibly reduced, and the heat generation is suppressed. As a result, the front motor 21 is protected from being overheated.

Further, in the electric vehicle 100 of the present embodiment, the control mode is switched to the driving performance mode before the front torque T_{f} is limited to the upper limit torque UL_{FT}, and thus the total torque ΣT is maintained at the required torque T_{req}. Therefore, as illustrated in FIG. 9(C), the vehicle speed V is maintained in the electric vehicle 100 of the present embodiment.

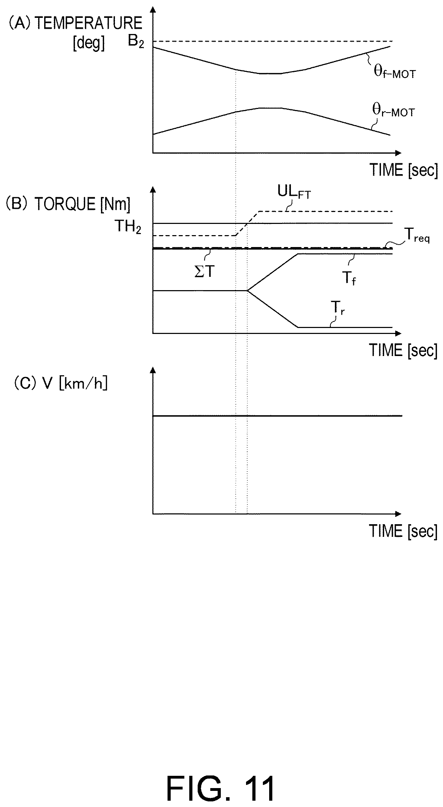

FIG. 11 is a graph schematically illustrating changes in temperature and torque of each motor, as well as changes in vehicle speed in the case of returning to the power consumption suppression mode, in the electric vehicle 100 according to the present embodiment. As illustrated in FIG. 11(A), when the temperature θ_{f-MOT} of the front motor 21 is sufficiently decreased to, for example, the temperature B₂ or lower, the upper limit torque UL_{FT} starts to recover (increase) as illustrated in FIG. 11(B). When the upper limit torque UL_{FT} recovers to the second threshold TH₂ or more, it is determined that the necessity to protect the front motor 21 from overheating has decreased, and the control mode returns to the power consumption suppression mode. In both the power consumption suppression mode and the driving performance mode, the required torque T_{req} is distributed to the front torque T_{f} and the rear torque Tᵣ without excess or deficiency. Therefore, as described above, even when the control mode returns to the power consumption suppression mode, the total torque ΣT is maintained at the required torque T_{req}. Therefore, in the electric vehicle 100 of the present embodiment, the vehicle speed V is maintained even when the control mode returns to the power consumption suppression mode.

In the above embodiment, the first threshold TH₁ and the second threshold TH₂ are set for the upper limit torque UL_{FT}, and the upper limit torque UL_{FT} serves as a criterion for determining whether to automatically switch the control mode, but the present invention is not limited thereto. A similar threshold is set for the temperature of the front drive system 11, and the temperature of the front drive system 11 can be used as a criterion for determining whether to automatically switch the control mode. However, as in the above embodiment, when temperatures of a plurality of portions of the front drive system 11 are detected and the upper limit torque UL_{FT} is determined by combining the temperatures, it is simple and direct to use the upper limit torque UL_{FT} as a criterion for determining whether to automatically switch the control mode. As a result, when the upper limit torque UL_{FT} is used as a criterion, the control mode can be automatically switched particularly accurately.

The automatic switching control of the control mode according to the above embodiment is particularly suitable for a driving scene in which the front drive system 11 is under a high load. This is because, in a situation in which the front drive system 11 intensively operates in the power consumption suppression mode and the temperature of the front drive system 11 has already increased and in a driving scene under a high load, the likelihood that the front drive system 11 exceeds the heat resistance temperature increases.

Specifically, the automatic switching control of the control mode according to the above embodiment is particularly suitable when the electric vehicle 100 travels on an uphill road, when the electric vehicle 100 travels while towing another vehicle or the like, or when the electric vehicle 100 travels on an uphill road while towing another vehicle or the like. That is, when the control mode is the power consumption suppression mode and the vehicle travels on an uphill road, it is preferable to automatically and forcibly switch the control mode to the driving performance mode as in the above embodiment after the upper limit torque UL_{FT} decreases and before the output of the front torque T_{f} is limited to the upper limit torque UL_{FT}. When the control mode is the power consumption suppression mode and the vehicle travels while towing another vehicle, it is preferable to automatically and forcibly switch the control mode to the driving performance mode as in the above embodiment after the upper limit torque UL_{FT} decreases and before the output of the front torque T_{f} is limited to the upper limit torque UL_{FT}.

Whether the electric vehicle 100 travels on an uphill road can be determined based on the road surface gradient ψ_{road} or the like. Whether the electric vehicle 100 tows another vehicle or the like can be determined based on setting by a towing switch or the like (not illustrated), a load exerted by another vehicle or the like on a towing portion, or the like.

[Modification] The electric vehicle 100 of the above embodiment is in a two-wheel drive state using the front wheels 22 in the power consumption suppression mode, but is not limited thereto. The electric vehicle 100 may be configured to be in a two-wheel drive state (or a state close to a two-wheel drive, such as T_{f} : Tᵣ = 20 : 80) using the rear wheels 32 in the power consumption suppression mode. Therefore, regarding the automatic switching control of the control mode, the electric vehicle 100 in the two-wheel drive state using the front wheels 22 in the power consumption suppression mode is substantially equivalent to an electric vehicle in the modification in the two-wheel drive state using the rear wheels 32 in the power consumption suppression mode. Therefore, the electric vehicle according to the modification can be configured as follows. That is, in the power consumption suppression mode, the required torque T_{req} is distributed more to the rear torque Tᵣ than to the front torque T_{f}. In the driving performance mode, the required torque T_{req} is distributed less to the rear torque as compared to the power consumption suppression mode. The temperature of the rear drive system 12 that drives the rear wheel 32 is acquired. An output of the rear torque Tᵣ is limited by setting an upper limit value UL_{RT} corresponding to the temperature of the rear drive system 12 for the distributed rear torque Tᵣ. When the control mode is the power consumption suppression mode, the control mode is switched to the driving performance mode after the upper limit value UL_{RT} decreases and before the output of the rear torque Tᵣ is limited to the upper limit value UL_{RT}. That is, the electric vehicle in this modification is obtained by exchanging roles of the front wheels 22 and the front drive system 11 with those of the rear wheels 32 and the rear drive system 12 in the electric vehicle 100 of the above embodiment.

However, when the two-wheel drive state (front-wheel drive) using the front wheels 22 is compared with the two-wheel drive state (rear-wheel drive) using the rear wheels 32, the two-wheel drive state (front-wheel drive) using the front wheels 22 allows for more stable driving on any road surface, including slippery road surfaces, regardless of the skill of the driver. Therefore, in the power consumption suppression mode, it is particularly preferable that the electric vehicle 100 is configured to be in the two-wheel drive state using the front wheels 22 as in the above embodiment.

As described above, a method for controlling an electric vehicle according to the embodiment and the modification is a method for controlling an electric vehicle, the electric vehicle having a power consumption suppression mode with a priority given to suppression of power consumption and a driving performance mode with a priority given to driving performance as a control mode for distributing a required torque T_{req} to a front torque T_{f} that is a torque generated in the front wheels 22 and a rear torque Tᵣ that is a torque generated in the rear wheels 32 and adjusting the distribution of the required torque T_{req}. In the method for controlling an electric vehicle, in the power consumption suppression mode, the required torque T_{req} is distributed more to either the front torque T_{f} or the rear torque Tᵣ, and in the driving performance mode, the front torque T_{f} or the rear torque Tᵣ to which the required torque T_{req} is distributed more in the power consumption suppression mode is reduced. In addition, a temperature of one drive system of the front drive system 11 for driving the front wheels 22 and the rear drive system for driving the rear wheels 32 is acquired, the one drive system corresponding to the front torque T_{f} or the rear torque Tᵣ to which the required torque T_{req} is distributed more in the power consumption suppression mode. The front torque T_{f} or the rear torque Tᵣ to which the required torque T_{req} is distributed more in the power consumption suppression mode is limited by setting, for the front torque T_{f} or the rear torque Tᵣ to which the required torque T_{req} is distributed more in the power consumption suppression mode, an upper limit value (UL_{FT} or UL_{RT}) corresponding to the temperature of the corresponding drive system. Further, when the control mode is the power consumption suppression mode, the control mode is switched to the driving performance mode after the upper limit value (UL_{FT} or UL_{RT}) decreases and before the front torque T_{f} or the rear torque Tᵣ to which the required torque T_{req} is distributed more in the power consumption suppression mode is limited to the upper limit value (UL_{FT} or UL_{RT}).

Thus, when the control mode is the power consumption suppression mode, the control mode is switched to the driving performance mode after the upper limit value (UL_{FT} or UL_{RT}) decreases and before the output of the front torque T_{f} or the rear torque Tᵣ to which the required torque T_{req} is distributed more is limited to the upper limit value (UL_{FT} or UL_{RT}), and thus the front drive system 11 or the rear drive system 12 to which the required torque T_{req} is distributed more is reliably protected from overheating and the total torque ΣT is maintained at the required torque T_{req}. That is, according to the method for controlling an electric vehicle of the embodiment and the modification, the electric vehicle 100 and the electric vehicle in the modification can protect the drive system from overheating and can be driven with the required torque even when the torque distribution is adjusted to the distribution for suppressing the power consumption.

More specifically, for example, the method for controlling an electric vehicle according to the embodiment is a method for controlling the electric vehicle 100, the electric vehicle 100 having a power consumption suppression mode with a priority given to suppression of power consumption and a driving performance mode with a priority given to driving performance as a control mode for distributing a required torque T_{req} to a front torque T_{f} that is a torque generated in the front wheels 22 and a rear torque Tᵣ that is a torque generated in the rear wheels 32 and adjusting the distribution of the required torque T_{req}. In the method for controlling the electric vehicle 100, in the power consumption suppression mode, the required torque T_{req} is distributed more to the front torque T_{f} than to the rear torque Tᵣ, and in the driving performance mode, the required torque T_{req} is distributed less to the front torque T_{f} as compared with the power consumption suppression mode. A temperature of the front drive system 11 for driving the front wheels 22 is acquired, and an output of the front torque T_{f} is limited by setting the upper limit value (upper limit torque UL_{FT}) corresponding to the temperature of the front drive system 11 for the distributed front torque T_{f}. When the control mode is the power consumption suppression mode, the control mode is switched to the driving performance mode after the upper limit value (upper limit torque UL_{FT}) decreases and before the output of the front torque T_{f} is limited to the upper limit value (upper limit torque UL_{FT}).

Thus, when the control mode is the power consumption suppression mode, the control mode is switched to the driving performance mode after the upper limit value (upper limit torque UL_{FT}) decreases and before the output of the front torque T_{f} is limited to the upper limit value (upper limit torque UL_{FT}), and thus the front drive system 11 is reliably protected from overheating, and the total torque ΣT is maintained at the required torque T_{req}. That is, according to the method for controlling an electric vehicle of the embodiment, the electric vehicle 100 can protect the drive system from overheating and can be driven with the required torque even when the torque distribution is adjusted to the distribution for suppressing the power consumption.

In the method for controlling an electric vehicle according to the embodiment, the temperature of the front drive system 11 is a temperature θ_{f-MOT} of an electric motor (front motor 21) that generates the front torque T_{f}, a temperature θ_{f-INV} of an inverter (front inverter 23) that drives the electric motor, or both the temperature (θ_{f-MOT}) of the electric motor and the temperature (θ_{f-INV}) of the inverter.

In the front drive system 11, portions that are particularly likely to be overheated are the front motor 21 and the front inverter 23. For this reason, as described above, the temperature θ_{f-MOT} of the front motor 21 and the temperature θ_{f-INV} of the front inverter 23 are acquired as the temperature of the front drive system 11, and automatic switching control of the control mode is performed based on these temperatures, so that the front drive system 11 is particularly likely to be protected accurately from overheating.

In the method for controlling an electric vehicle according to the embodiment, a first threshold TH₁ serving as a condition for switching from the power consumption suppression mode to the driving performance mode is set in advance for the upper limit value (upper limit torque UL_{FT}). When the upper limit value (upper limit torque UL_{FT}) is equal to or smaller than the first threshold TH₁, the control mode is switched from the power consumption suppression mode to the driving performance mode.

Thus, when the upper limit torque UL_{FT} is used as a criterion for automatic switching control of the control mode, the control mode can be easily and particularly accurately switched from the power consumption suppression mode to the driving performance mode even when the front drive system 11 has a plurality of portions to be monitored for overheat protection.

In the method for controlling an electric vehicle according to the embodiment, when the control mode is to be switched, change rates of the front torque T_{f} and the rear torque Tᵣ are limited.

Thus, when the rate limiter 55 limits the change rates of the front torque T_{f} and the rear torque Tᵣ at the time of switching the control mode, automatic and forced switching of the control mode is smoothly performed without causing vibration or the like in the electric vehicle 100.

In the method for controlling an electric vehicle according to the embodiment, the control mode is switched from the driving performance mode to the power consumption suppression mode when the upper limit value (upper limit torque UL_{FT}) increases after the control mode is switched from the power consumption suppression mode to the driving performance mode.

Thus, after the control mode is automatically and forcibly switched to the driving performance mode, when it is determined that there is no longer a risk of overheating in the front drive system 11 due to the increase in the upper limit torque UL_{FT}, the control mode is returned to the power consumption suppression mode, and thus the period during which the control mode is forcibly switched to the driving performance mode is minimized. As a result, it is easy to suppress power consumption as long as the front drive system 11 is not at risk of overheating.

In the method for controlling an electric vehicle according to the embodiment, a second threshold TH₂ serving as a return condition to the power consumption suppression mode is set in advance for the upper limit value (upper limit torque UL_{FT}), and when the upper limit value (upper limit torque UL_{FT}) is equal to or larger than the second threshold TH₂, the control mode is returned to the power consumption suppression mode.

Thus, when the upper limit torque UL_{FT} is used as a criterion for determining whether to return to the power consumption suppression mode, the control mode can be easily and particularly accurately returned to the power consumption suppression mode even when the front drive system 11 has a plurality of portions to be monitored for overheat protection.

In the method for controlling an electric vehicle according to the embodiment, when the control mode is the power consumption suppression mode and the electric vehicle travels on an uphill road, the control mode is switched to the driving performance mode after the upper limit value (upper limit torque UL_{FT}) decreases and before the output of the front torque T_{f} is limited to the upper limit value (upper limit torque UL_{FT}).

The driving on the uphill road in the power consumption suppression mode imposes a higher load on the front drive system 11 compared to driving on a flat road. Therefore, for example, when the electric vehicle travels at a high speed in the power consumption suppression mode and travels on an uphill road in a state in which the temperature of the front drive system 11 has already increased, the possibility that the front drive system 11 falls into an overheating state is particularly high. Therefore, as described above, in a case where the automatic and forced switching control of the control mode is performed when the electric vehicle 100 travels on an uphill road, the electric vehicle 100 can more reliably protect the front drive system 11 from overheating while outputting the required torque T_{req}.

In the method for controlling an electric vehicle according to the embodiment, when the control mode is the power consumption suppression mode and the electric vehicle travels while towing another vehicle, the control mode is switched to the driving performance mode after the upper limit value decreases and before the output of the front torque T_{f} is limited to the upper limit value (upper limit torque UL_{FT}).

The towing driving performed in a state in which the control mode is the power consumption suppression mode imposes a particularly high load on the front drive system 11. Therefore, for example, when the electric vehicle travels at a high speed in the power consumption suppression mode and performs towing travel in a state in which the temperature of the front drive system 11 has already increased, or when the electric vehicle travels at a high speed while towing another vehicle in the power consumption suppression mode, the possibility that the front drive system 11 falls into an overheating state is particularly high. Therefore, as described above, in a case where the automatic and forced switching control of the control mode is performed when the electric vehicle 100 performs towing travel, the electric vehicle 100 can more reliably protect the front drive system 11 from overheating while outputting the required torque T_{req}.

A device for controlling an electric vehicle according to the embodiment and the modification is a method for controlling an electric vehicle, the electric vehicle having a power consumption suppression mode with a priority given to suppression of power consumption and a driving performance mode with a priority given to driving performance as a control mode for distributing a required torque T_{req} to a front torque T_{f} that is a torque generated in the front wheels 22 and a rear torque Tᵣ that is a torque generated in the rear wheels 32 and adjusting the distribution of the required torque T_{req}. In the device for controlling an electric vehicle, in the power consumption suppression mode, the required torque T_{req} is distributed more to either the front torque T_{f} or the rear torque Tᵣ, and in the driving performance mode, the front torque T_{f} or the rear torque Tᵣ to which the required torque T_{req} is distributed more in the power consumption suppression mode is reduced. In addition, a temperature of one drive system of the front drive system 11 for driving the front wheels 22 and the rear drive system for driving the rear wheels 32 is acquired, the one drive system corresponding to the front torque T_{f} or the rear torque Tᵣ to which the required torque T_{req} is distributed more in the power consumption suppression mode. The front torque T_{f} or the rear torque Tᵣ to which the required torque T_{req} is distributed more in the power consumption suppression mode is limited by setting, for the front torque T_{f} or the rear torque Tᵣ to which the required torque T_{req} is distributed more in the power consumption suppression mode, an upper limit value (UL_{FT} or UL_{RT}) corresponding to the temperature of the corresponding drive system. Further, when the control mode is the power consumption suppression mode, the control mode is switched to the driving performance mode after the upper limit value (UL_{FT} or UL_{RT}) decreases and before the front torque T_{f} or the rear torque Tᵣ to which the required torque T_{req} is distributed more in the power consumption suppression mode is limited to the upper limit value (UL_{FT} or UL_{RT}).

Thus, when the control mode is the power consumption suppression mode, the control mode is switched to the driving performance mode after the upper limit value (UL_{FT} or UL_{RT}) decreases and before the output of the front torque T_{f} or the rear torque Tᵣ to which the required torque T_{req} is distributed more is limited to the upper limit value (UL_{FT} or UL_{RT}), and thus the front drive system 11 or the rear drive system 12 to which the required torque T_{req} is distributed more is reliably protected from overheating and the total torque ΣT is maintained at the required torque T_{req}. That is, according to the method for controlling an electric vehicle of the embodiment and the modification, the electric vehicle 100 and the electric vehicle in the modification can protect the drive system from overheating and can be driven with the required torque even when the torque distribution is adjusted to the distribution for suppressing the power consumption.

More specifically, the device for controlling an electric vehicle according to the embodiment is a device (controller 14) for controlling the electric vehicle 100, the electric vehicle 100 having a power consumption suppression mode with a priority given to suppression of power consumption and a driving performance mode with a priority given to driving performance as a control mode for distributing a required torque T_{req} to a front torque T_{f} that is a torque generated in the front wheels 22 and a rear torque Tᵣ that is a torque generated in the rear wheels 32 and adjusting the distribution of the required torque T_{req}. A control device (controller 14) distributes the required torque T_{req} more to the front torque T_{f} than to the rear torque Tᵣ in the power consumption suppression mode, and distributes the required torque T_{req} less to the front torque T_{f} in the driving performance mode as compared with the power consumption suppression mode. The control device (controller 14) acquires a temperature of the front drive system 11 for driving the front wheels 22, and limits an output of the front torque T_{f} by setting the upper limit value (upper limit torque UL_{FT}) corresponding to the temperature of the front drive system 11 for the distributed front torque T_{f}. When the control mode is the power consumption suppression mode, the control device (controller 14) switches the control mode to the driving performance mode after the upper limit value (upper limit torque UL_{FT}) decreases and before the output of the front torque T_{f} is limited to the upper limit value (upper limit torque UL_{FT}).

Thus, when the control mode is the power consumption suppression mode, the control mode is switched to the driving performance mode after the upper limit value (upper limit torque UL_{FT}) decreases and before the output of the front torque T_{f} is limited to the upper limit value (upper limit torque UL_{FT}), and thus the front drive system 11 is reliably protected from overheating, and the total torque ΣT is maintained at the required torque T_{req}. That is, according to the device for controlling an electric vehicle of the embodiment, the electric vehicle 100 can protect the drive system from overheating and can be driven with the required torque even when the torque distribution is adjusted to the distribution for suppressing the power consumption.

Although the embodiments of the present invention have been described above, the configurations described in the above-mentioned embodiments and modification are merely examples of applications of the present invention, and are not intended to limit the technical scope of the invention.

## Claims

1. A method for controlling an electric vehicle, the electric vehicle having a power consumption suppression mode with a priority given to suppression of power consumption and a driving performance mode with a priority given to driving performance as a control mode for distributing a required torque to a front torque that is a torque generated in a front wheel and a rear torque that is a torque generated in a rear wheel and adjusting the distribution of the required torque, the method comprising:
in the power consumption suppression mode, distributing the required torque more to either the front torque or the rear torque;
in the driving performance mode, reducing the front torque or the rear torque to which the required torque is distributed more in the power consumption suppression mode;
acquiring a temperature of one drive system of a front drive system for driving the front wheel and a rear drive system for driving the rear wheel, the one drive system corresponding to the front torque or the rear torque to which the required torque is distributed more in the power consumption suppression mode;
limiting the front torque or the rear torque to which the required torque is distributed more in the power consumption suppression mode by setting, for the front torque or the rear torque to which the required torque is distributed more in the power consumption suppression mode, an upper limit value corresponding to the temperature of the corresponding drive system; and
when the control mode is the power consumption suppression mode, switching the control mode to the driving performance mode after the upper limit value decreases and before the front torque or the rear torque to which the required torque is distributed more in the power consumption suppression mode is limited to the upper limit value.

2. The method for controlling an electric vehicle according to claim 1, wherein
in the power consumption suppression mode, the required torque is distributed more to the front torque than to the rear torque,
in the driving performance mode, the required torque is distributed less to the front torque as compared with the power consumption suppression mode,
a temperature of the front drive system for driving the front wheel is acquired,
an output of the front torque is limited by setting the upper limit value corresponding to the temperature of the front drive system for the distributed front torque, and
when the control mode is the power consumption suppression mode, the control mode is switched to the driving performance mode after the upper limit value decreases and before the output of the front torque is limited to the upper limit value.

3. The method for controlling an electric vehicle according to claim 2, wherein
the temperature of the front drive system is a temperature of an electric motor that generates the front torque, a temperature of an inverter that drives the electric motor, or both the temperature of the electric motor and the temperature of the inverter.

4. The method for controlling an electric vehicle according to claim 2, wherein
a first threshold serving as a condition for switching from the power consumption suppression mode to the driving performance mode is set in advance for the upper limit value, and
when the upper limit value is equal to or smaller than the first threshold, the control mode is switched from the power consumption suppression mode to the driving performance mode.

5. The method for controlling an electric vehicle according to claim 2, wherein
when the control mode is to be switched, change rates of the front torque and the rear torque are limited.

6. The method for controlling an electric vehicle according to claim 2, wherein
the control mode is switched from the driving performance mode to the power consumption suppression mode when the upper limit value increases after the control mode is switched from the power consumption suppression mode to the driving performance mode.

7. The method for controlling an electric vehicle according to claim 6, wherein
a second threshold serving as a return condition to the power consumption suppression mode is set in advance for the upper limit value, and
when the upper limit value is equal to or larger than the second threshold, the control mode is returned to the power consumption suppression mode.

8. The method for controlling an electric vehicle according to claim 2, wherein
when the control mode is the power consumption suppression mode and the electric vehicle travels on an uphill road, the control mode is switched to the driving performance mode after the upper limit value decreases and before the output of the front torque is limited to the upper limit value.

9. The method for controlling an electric vehicle according to any one of claims 2 to 8, wherein
when the control mode is the power consumption suppression mode and the electric vehicle travels while towing another vehicle, the control mode is switched to the driving performance mode after the upper limit value decreases and before the output of the front torque is limited to the upper limit value.

10. A device for controlling an electric vehicle, the electric vehicle having a power consumption suppression mode with a priority given to suppression of power consumption and a driving performance mode with a priority given to driving performance as a control mode for distributing a required torque to a front torque that is a torque generated in a front wheel and a rear torque that is a torque generated in a rear wheel and adjusting the distribution of the required torque, wherein
in the power consumption suppression mode, the required torque is distributed more to either the front torque or the rear torque,
in the driving performance mode, the front torque or the rear torque to which the required torque is distributed more in the power consumption suppression mode is reduced,
a temperature of one drive system of a front drive system for driving the front wheel and a rear drive system for driving the rear wheel is acquired, the one drive system corresponding to the front torque or the rear torque to which the required torque is distributed more in the power consumption suppression mode,
the front torque or the rear torque to which the required torque is distributed more in the power consumption suppression mode is limited by setting, for the front torque or the rear torque to which the required torque is distributed more in the power consumption suppression mode, an upper limit value corresponding to the temperature of the corresponding drive system, and
when the control mode is the power consumption suppression mode, the control mode is switched to the driving performance mode after the upper limit value decreases and before the front torque or the rear torque to which the required torque is distributed more in the power consumption suppression mode is limited to the upper limit value.
